(19) Europäisches Patentamt
European Patent Office
Office européen des brevets

(11) **EP 1 400 036 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: **02754195.2**

(22) Anmeldetag: **12.06.2002**

(51) Int Cl.:
***H04B 7/06*** (2006.01)

(86) Internationale Anmeldenummer:
**PCT/DE2002/002153**

(87) Internationale Veröffentlichungsnummer:
**WO 2003/003612 (09.01.2003 Gazette 2003/02)**

(54) **STRAHLFORMUNG EINES FUNKSIGNALS**

BEAM-SHAPING OF A RADIO SIGNAL

FORMATION DE FAISCEAU D'UN SIGNAL RADIO

(84) Benannte Vertragsstaaten:
**DE FR GB**

(30) Priorität: **26.06.2001 DE 10130603**

(43) Veröffentlichungstag der Anmeldung:
**24.03.2004 Patentblatt 2004/13**

(73) Patentinhaber: **Nokia Siemens Networks GmbH & Co. KG**
**81541 München (DE)**

(72) Erfinder:
• **LOBINGER, Andreas**
**83714 Miesbach (DE)**
• **RAAF, Bernhard**
**81475 München (DE)**
• **SEEGER, Alexander**
**85622 Feldkirchen (DE)**
• **WIEDMANN, Ralf**
**81369 München (DE)**

(56) Entgegenhaltungen:
**WO-A-02/056500**

• **SAMSUNG AND SEOUL NATIONAL UNIVERSITY: "Preliminary Version of Algorithm and Simulation Results for Tx Diversity with more than 2 Tx Antennas" TSG-RAN WORKING GROUP 1 MEETING #14, 4. - 7. Juli 2000, Seiten 1-4, XP002197993 Oulu, Finland**
• **"Advanced closed loop Tx diversity concept" 3GPP TSG RAN WG 1, XX, XX, 4. Juli 2000 (2000-07-04), XP002169992**

**Beschreibung**

Die vorliegende Erfindung betrifft ein Verfahren zum Steuern der Strahlformung eines von einer mit einer Mehrzahl von Antennen ausgerüsteten ersten Station an eine zweite Station übertragenen Funksignals und zur Durchführung des Verfahrens geeignete Stationen.

Derartige Verfahren und Stationen werden in Mobilfunk-Kommunikationsystemen eingesetzt. In solchen Systemen breitet sich ein Signal von einer Basisstation zu einer Teilnehmerstation häufig auf einer Mehrzahl von Übertragungswegen aus, und die Verwendung von Basisstationen mit einer Mehrzahl von Antennen, die mit einem gleichen Funksignal, jeweils multipliziert mit Koeffizienten eines aktuellen Gewichtungsvektors, beaufschlagbar sind, ermöglicht das Senden des Funksignals mit einer zeitlich veränderlichen räumlichen Richtcharakteristik, die jeweils den einen oder anderen dieser Übertragungswege bevorzugt mit Energie versorgt.

Mehrfachreflexionen führen dazu, dass wenn sich die mobile Teilnehmerstation bewegt, die Intensität, mit der das Funksignal über einen gegebenen Übertragungsweg die Teilnehmerstation erreicht, auf einer kurzen Zeitskala stark schwankt. Auswertungen der Intensitätsschwankungen werden als Rückkopplungsinformation an die Basisstation geliefert, um diese zu veranlassen, einen anderen Gewichtungsvektor zu verwenden, der einem zeitweilig nicht durch Interferenz gedämpften Übertragungsweg entspricht.

Zur effizienten Übertragung der Rückkopplungsinformationen wird ein Satz von Basisgewichtungsvektoren definiert, die Teilnehmer- und Basisstation bekannt sind, und die von der Teilnehmerstation gelieferte Rückkopplungsinformation spezifiziert jeweils einen aus diesem Satz ausgewählten Vektor, der von der Basisstation als aktueller Gewichtungsvektor verwendet werden soll. Die hierfür benötigte Bitzahl der Rückkopplungsinformation hängt allein von der Zahl der Vektoren des Satzes ab, nicht aber etwa von deren Komponentenzahl (die der Zahl der Antennen der Basisstation entspricht) oder der Feinheit bzw. Auflösung der Quantisierung.

Dabei müssen nicht alle Basisgewichtungsvektoren des Satzes linear unabhängig sein. Ein Teil des Satzes kann z.B. auch aus Basisgewichtungsvektoren bestehen, die Linearkombination der linear unabhängigen Basisgewichtungsvektoren mit vorgegebenen Koeffizienten sind.

Je nach der Eigenschaft des Mobilfunkkanals (urban, rural) genügt eine unterschiedliche Anzahl von Basisgewichtungsvektoren in einem Satz, bzw. kann die Anzahl linear unabhängiger Basisgewichtungsvektoren des Satzes unterschiedlich sein.

Je größer die Zahl der zwischen den Stationen eines Mobilfunkkanals existierenden unabhängigen Übertragungswege ist, um so größer ist die Zahl der linear unabhängigen Basisgewichtungsvektoren in dem Satz zu wählen. Je größer die Zahl der Basisgewichtungsvektoren des Satzes ist, um so mehr Bits werden zum Bezeichnen eines Basisgewichtungsvektors benötigt, und um so mehr Rückkopplungsinformation muss von der mobilen Teilnehmerstation an die Basisstation übertragen werden, um den zu verwendenden aktuellen Gewichtungsvektor vollständig zu definieren. D.h. je mehr Übertragungswege gesteuert genutzt werden sollen, um so mehr Rückkopplungsinformation muss von der Teilnehmerstation an die Basisstation übertragen werden, und, da die hierfür zur Verfügung stehende Bandbreite begrenzt ist, nimmt mit zunehmender Zahl von zu berücksichtigenden Basisgewichtungsvektoren die Häufigkeit ab, mit der der aktuelle Gewichtungsvektor aktualisiert werden kann. Daher wird in der Praxis die Zahl der Basisgewichtungsvektoren, aus denen der aktuelle Gewichtungsvektor gebildet wird, auf eine kleine Zahl begrenzt. Wenn andererseits diese Zahl der Basisgewichtungsvektoren zu klein gewählt wird, besteht die Gefahr, dass alle Übertragungswege, die von der Basisstation mit Signalenergie versorgt werden, gleichzeitig gedämpft sind und das Funksignal an der Teilnehmerstation nicht mit der erforderlichen Qualität empfangen werden kann.

In der nicht vorveröffentlichen Offenlegungsschrift WO 02 /056500 A ist ein Verfahren zum Steuern der Strahlformung eines von einer mit einer Mehrzahl von Antennen ausgerüsteten ersten Station an eine zweite Station übertragenen Funksignals offenbart.

Ein weiteres Verfahren zum Steuern der Strahlformung ist aus dem Dokument SAMSUNG AND SEOUL NATIONAL UNIVERSITY: "Preliminary Version of Algorithm and Simulation Results for Tx Diversity with more than 2 Tx Antennas" TSG-RAN WORKING GROUP 1 MEETING #14, 4. Juli 2000 (2000-07-04), - 7. Juli 2000 (2000-07-07) Seiten 1-4, Oulu, Finland bekannt.

Aufgabe der Erfindung ist, ein Strahlformungsverfahren und eine zur Durchführung des Verfahrens geeignete Vorrichtung aufzuzeigen, die es erlauben, bei Bedarf eine Vielzahl von Basisgewichtungsvektoren bei der Bildung eines aktuellen Gewichtungsvektors zu kombinieren und die hierfür von der Teilnehmerstation an die Basisstation zu übertragende Menge an Rückkopplungsinformation im Mittel gering zu halten.

Die Aufgabe wird durch die beanspruchte Erfindung gelöst.

Indem erfindungsgemäß ein zweiter Satz von Basisgewichtungsvektoren definiert wird, und eine Information darüber, welcher der zwei Sätze für die Strahlformung verwendet werden soll, zwischen den an der Übertragung beteiligten Stationen übermittelt wird, kann je nach Übertragungsbedingungen ein geeigneter Satz von Basisgewichtungsvektoren herangezogen und die zur Festlegung eines zu verwendenden aktuellen Gewichtungsvektors aus dem jeweils herangezogenen Satz benötigte Rückkopplungsinformation in kompakter Form übertragen werden.

Vorzugsweise ist die Zahl der Basisgewichtungsvektoren des zweiten Satzes kleiner als die des ersten, so dass die Zahl der Bits an Rückkopplungsinformation, die zum Festlegen des aktuellen Gewichtungsvektors aus dem zweiten Satz übertragen werden muss, kleiner ist als die zum Festlegen eines Vektors aus dem ersten Satz benötigte. Dies erlaubt bei Verwendung des zweiten Satzes eine häufigere Aktualisierung des aktuellen Gewichtungsvektors als bei Verwendung des ersten Satzes.

Notwendig ist, dass beide Station die Gesamtheit der Basisgewichtungsvektoren kennen, die zur Auswahl stehen. Um zu gewährleisten, dass beide Stationen über identische Basisgewichtungsvektoren verfügen, können diese vordefiniert sein. Eine andere Möglichkeit ist, dass sie von der zweiten Station anhand von an dem von der ersten Station ausgestrahlten Funksignal durchgeführten Messungen festgelegt werden und an die erste übermittelt werden. Wenn ein Satz von Basisgewichtungsvektoren nur aus linear unabhängigen Vektoren besteht, so muss jeder einzelne dieser Vektoren von der ersten an die zweite Station übermittelt werden. Der Satz kann aber auch aus einer ersten Gruppe von linear unabhängigen Vektoren und einer zweiten Gruppe von Vektoren bestehen, die aus denen der ersten Gruppe nach einem festgelegten Verfahren rechnerisch, insbesondere durch Linearkombination, gebildet werden. In diesem Fall genügt es, wenn lediglich die linear unabhängigen Vektoren zwischen den Stationen übertragen werden. Alternativ besteht auch die Möglichkeit, dass die erste Station entsprechende Messungen an einem von der zweiten Station gesendeten Funksignal durchführt und anhand dieser Messungen festgelegte Basisgewichtungsvektoren an die zweite übermittelt. Diese Alternative eignet sich insbesondere für den Fall, dass beide Stationen eine Sende- und Empfangsfrequenz gemeinsam nutzen.

Vorzugsweise werden die Basisgewichtungsvektoren des ersten und/oder des zweiten Satzes als Eigenvektoren der Kovarianzmatrix des Übertragungskanals zwischen den zwei Stationen oder als Linearkombinationen (z.B. Summe oder Differenz) solcher Eigenvektoren erhalten.

Die Auswertung der von der zweiten Station gelieferten Rückkopplungsinformation erfolgt in unterschiedlicher Weise, je nachdem, ob der von der ersten Station zu verwendende Gewichtungsvektor aus dem ersten oder dem zweiten Satz auszuwählen ist.

Hierfür wird die Rückkopplungsinformation in Form einer Bitfolge übertragen, die von der ersten Station bei Verwendung des ersten Satzes von Basisgewichtungsvektoren in eine Folge von ersten Codewörtern mit einer ersten Bitzahl und bei Verwendung des zweiten Satzes von Basisgewichtungsvektoren in eine Folge von zweiten Codewörtern mit einer zweiten Bitzahl zerlegt wird, wobei jedem Basisgewichtungsvektor des ersten Satzes ein möglicher Wert der ersten Codewörter und jedem Basisgewichtungsvektor des zweiten Satzes ein möglicher Wert der zweiten Codewörter zugeordnet ist.

Dabei enthält der zweite Satz von Basisgewichtungsvektoren vorzugsweise Elemente, die auch Element des ersten Satzes sind und denen jeweils ein zweites Codewort zugeordnet ist, das in dem in dem gleichen Element zugeordneten ersten Codewort enthalten ist. Die durch diese Maßnahme erreichbaren Vorteile werden verständlich anhand der im folgenden betrachteten Einzelfälle:

Der erste Einzelfall ist der, dass die erste und die zweite Bitzahl gleich sind; in diesem Fall ist das Merkmal, dass das zweite Codewort eines beiden Sätzen von Basisgewichtungsvektoren gemeinsamen Elements in dem dem gleichen Element zugeordneten ersten Codewort enthalten ist, gleichbedeutend mit der Identität der zwei Codewörter. D.h., wenn die zweite Station in der von ihr gelieferten Rückkopplungsinformation eines der gemeinsamen Elemente der zwei Sätze spezifiziert, so wird die erste Station dieses Element korrekt als aktuellen Gewichtungsvektor verwenden, egal, ob sie es aus dem ersten oder dem zweiten Satz von Basisgewichtungsvektoren auswählt.

Der zweite Einzelfall ist der, dass die erste Bitzahl das n-fache der zweiten Bitzahl ist, wobei n eine natürliche Zahl und größer als 1 ist. In diesem Fall ist das erste Codewort eines im ersten und im zweiten Satz von Basisgewichtungsvektoren vorkommenden Elements zweckmäßigerweise durch n-faches Wiederholen des zweiten Codeworts gebildet. Auch hier verwendet die erste Station, wenn die von der zweiten Station gelieferte Rückkopplungsinformation eines der gemeinsamen Elemente der zwei Sätze spezifiziert, dieses Element in korrekter Weise als aktuellen Gewichtungsvektor, egal, ob sie es aus dem ersten oder dem zweiten Satz von Basisgewichtungsvektoren auswählt.

Der gleiche Erfolg ist auch in einem dritten Fall erreichbar, bei dem die erste Bitzahl zwischen dem n-fachen und (n-1)-fachen der zweiten Bitzahl beträgt. In diesem Fall wird wie im zuvor betrachteten zweiten Fall das zweite Codewort eines gemeinsamen Elements zunächst n-fach wiederholt und dann auf die erste Bitzahl abgeschnitten, um das zugeordnete erste Codewort zu bilden. Zweckmäßigerweise erfolgt dieses Abschneiden abwechselnd vorne und hinten.

Alle diese Maßnahmen erleichtern erheblich den Wechsel von der Verwendung des ersten Satzes von Basisgewichtungsvektoren zum zweiten und zurück. Wenn nämlich die zweite Station einen Befehl an die erste Station sendet, um diese zu veranlassen, von der Verwendung des ersten Satzes von Basisgewichtungsvektoren auf den zweiten Satz oder umgekehrt überzugehen, so kann die zweite Station erst dann sicher sein, dass die erste diesen Befehl korrekt empfangen und ausgeführt hat, wenn die erste eine diesbezügliche Bestätigung an die zweite Station zurückgeliefert hat. Sowohl bei der Übertragung des Befehls als auch bei der Übertragung der Bestätigung können Fehler auftreten, die dazu führen, dass die zwei Stationen jeweils davon ausgehen, dass unterschiedliche Sätze von Basisgewichtungsvektoren verwendet werden sollen. Wenn aber nach dem Senden des Befehls zum Übergehen von einem der zwei Sätze auf den anderen die zweite Station in der Rückkopplungsinformation sich darauf beschränkt, Basisgewichtungsvektoren zu spezifizieren, die beiden Sätzen gemeinsam sind, so wählt die erste Station unabhängig davon, welchen der zwei Sätze sie verwendet, stets den von der zweiten Station spezifizierten Basisgewichtungsvektor als aktuellen Gewichtungsvektor aus.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1            ein Blockschaltbild eines Mobilfunknetzes; und

Fig. 2a, 2b, 2c     Beispiele für die Größenverteilung der Eigenwerte von vier Eigenvektoren einer Kovarianzmatrix.

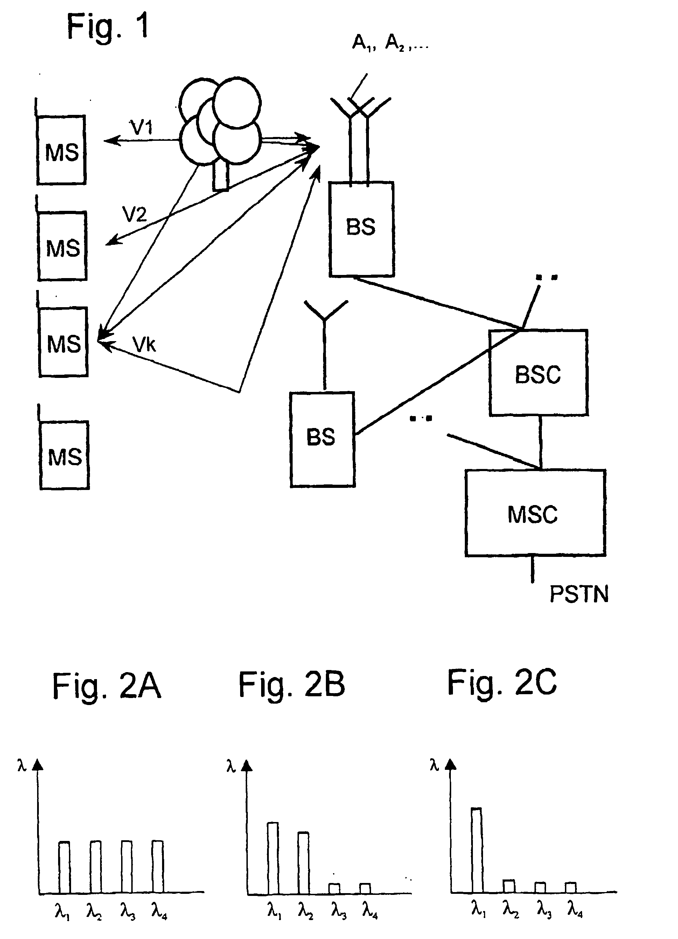

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Sie ist mit einer Antenneneinrichtungen AE ausgerüstet, die mehrere Antennen ($A_1$ - $A_M$) umfasst.

In Fig. 1 sind beispielhaft Übertragungswege V1, V2, Vk zur Übertragung von Nutzinformationen und Signalisierungsinformationen zwischen Teilnehmerstationen MS1, MS2, MSk, MSn und der Basisstation BS dargestellt. Die Zahl der Übertragungswege, über die ein Funksignal zu einer Teilnehmerstation gelangen kann, ist von Station zu Station variabel und ändert sich auch für eine einzelne Teilnehmerstation MS, wenn diese sich bewegt.

## Erstes Ausführungsbeispiel

Es wird ein Mobilfunk-Kommunikationsystem betrachtet, das eine Basisstation BS mit M=4 Antennen verwendet. Eine mobile Teilnehmerstation MS erzeugt für jeden von N zwischen der Basisstation BS und der Teilnehmerstation MS existierenden Übertragungswegen komplexe Kanalschätzungen $h_{nm}$, n=1, 2, ..., N; m=1, 2, ..., M. Die M Kanalschätzungen, die auf einen gleichen Übertragungsweg n bezogen sind, werden zu einem Kanalvektor $h_n = (h_{n1}, h_{n2}, ..., h_{nM})^T$ zusammengefasst. Aus diesen Kanalschätzungen wird die Kovarianzmatrix

$$\mathbf{R} = \sum \mathbf{h}_n \mathbf{h}_n^{\,H}$$

bestimmt. Die Kovarianzmatrix **R** wird über einen Zeitraum gemittelt, dessen Länge ausreichend ist, um Einflüsse von Schwankungen von Empfangsbedingungen durch kurzfristige Interferenzerscheinungen weitgehend auszumitteln. Eine von der Teilnehmerstation MS durchgeführte Eigenvektoranalyse der gemittelten Kovarianzmatrix liefert einen Satz von Eigenvektoren $\mathbf{s}_1$, ..., $\mathbf{s}_M$ mit Eigenwerten $\lambda_1$, ... $\lambda_M$; M=4. Die Eigenwerte werden der Größe nach geordnet ($\lambda_1 \geq \lambda_2 \geq \lambda_3 \geq \lambda_4$). Die Eigenvektoren $\mathbf{s}_1$, ..., $\mathbf{s}_M$ werden in der so festgelegten Reihenfolge an die Basisstation BS übermittelt. Alternativ kann auch vorgesehen werden, dass nur die M' Eigenvektoren $\mathbf{s}_1$, ..., $\mathbf{s}_M$ mit den größten Eigenwerten an die Basisstation übermittelt werden (M' < M). Der Wert von M' kann auch variabel sein, um unterschiedlichen Empfangssituationen (rural/urban, langsame/schnelle Bewegung der Teilnehmerstation) Rechnung zu tragen.

Die Eigenvektoren werden von Zeit zu Zeit anhand einer neu gemessenen Kovarianzmatrix **R** aktualisiert und neu an die Basisstation BS übermittelt. Dabei können sich auch Änderungen bei den Größenverteilungen der Eigenwerte $\lambda_1$ bis $\lambda_M$ ergeben, die aus der Kovarianzmatrix gebildet werden.

Wenn die Eigenwerte von ähnlicher Größe sind, wie in Fig. 2a gezeigt, wird davon ausgegangen, dass die Wahrscheinlichkeit jedes einzelnen Eigenvektors $\mathbf{s}_1$, ..., $\mathbf{s}_M$, für die Strahlformung des von der Basisstation an die Teilnehmerstation ausgestrahlten Signals benötigt zu werden, im wesentlichen gleich ist. Die Teilnehmerstation MS arbeitet daher in einem ersten Betriebszustand, in dem sie einen ersten Satz von Basisgewichtungsvektoren verwendet, der aus den Eigenvektoren $\mathbf{s}_1$ bis $\mathbf{s}_4$ besteht, jeweils einen Vektor $\mathbf{s}_i$ aus diesem Satz als von der Basisstation für die Strahlformung zu verwendenden Gewichtungsvektor auswählt und dessen Index i als Rückkopplungsinformation an die Basisstation BS überträgt. Die Übertragung des Index i nimmt zwei Bits in Anspruch, die an einer vorgegebenen Position von zwei aufeinanderfolgenden Zeitschlitzen des Uplink-Signals an die Basisstation BS übertragen werden.

Wenn die Größenverhältnisse der Eigenwerte nicht ausgeglichen sind, wie in Fig. 2b dargestellt, wird davon ausgegangen, dass die Eigenvektoren $\mathbf{s}_3$, $\mathbf{s}_4$, die die kleineren Eigenwerte $\lambda_3$, $\lambda_4$ aufweisen, für die Strahlformung im wesentlichen nicht benötigt werden; in diesem Fall wechselt die Teilnehmerstation in einen zweiten Betriebszustand, in der sie als Rückkopplungsinformation an der gleichen vorgegebenen Stelle von jeweils zwei aufeinanderfolgenden Zeitschlitzen zwei Bits überträgt, die eine relative Phase $\varphi$, z.B. mit den Werten $0$, $\pi/2$, $\pi$, $3\pi/2$, definieren, mit der die Basisstation BS die Eigenvektoren $s_1$, $s_2$ überlagern soll, um einen aktuellen Gewichtungsvektor w zu bilden ($w = s_1 + e^{j\varphi}s_2$). D.h. im zweiten Betriebszustand wird der aktuelle Gewichtungsvektor unter den vier Basisgewichtungsvektoren $s_1+s_2$, $s_1+js_2$, $s_1-s_2$, $s_1-js_2$ ausgewählt.

Die Basisstation BS wird durch geschützte Übertragung eines entsprechenden Steuerbits, vorzugsweise auf einer höheren Ebene des OSI-Protokollstacks, von dem Übergang der Teilnehmerstation MS in den zweiten Betriebszustand informiert, so dass sie die von der Teilnehmerstation MS gelieferte Rückkopplungsinformation in korrekter Weise auswerten kann.

Ein "unausgeglichenes Größenverhältnis" zwischen den Eigenvektoren $\lambda_1$, $\lambda_2$ einerseits und $\lambda_3$, $\lambda_4$ andererseits kann beispielsweise angenommen werden, wenn die Bedingungen $\lambda_3 <$ No und $\lambda_4 <$ No oder die Bedingung $\lambda_3 + \lambda_4 <$ No erfüllt ist, wobei No einen Schwellwert in der Nähe der Rauschgrenze bezeichnet, d.h. einen Schwellwert, dessen Betrag geringfügig größer ist als die Genauigkeit, mit der die Teilnehmerstation MS die Eigenwerte zu ermitteln im Stande ist.

Ein unausgeglichenes Größenverhältnis kann auch angenommen werden, wenn die zwei größeren Eigenwerte $\lambda_1$, $\lambda_2$ die kleineren bei weitem übersteigen, z.B. wenn $(\lambda_3 + \lambda_4) / (\lambda_1 + \lambda_2) < \alpha$, z.B. mit $\alpha = 0,2$, erfüllt ist.

Bei dieser Ausgestaltung des Verfahrens erfolgt in beiden Betriebszuständen die Aktualisierung des Gewichtungsvektors jeweils nach Übertragung von zwei Rückkopplungsbits, also nach jedem zweiten der Teilnehmerstation MS zugeteilten Zeitschlitz.

Für die Umschaltung zurück zum ersten Betriebszustand kann vorgesehen werden, dass diese nach einer vorgegebenen Zahl von Zeitschlitzen automatisch erfolgt, sofern nicht die Teilnehmerstation MS vorher erneut einen Befehl zum Verwenden des zweiten Betriebszustandes an die Basisstation BS sendet. Alternativ kann vorgesehen werden, dass die Teilnehmerstation MS einen Befehl zum Zurückkehren zum ersten Betriebszustand dann an die Basisstation BS sendet, wenn die Eigenwerte $\lambda_1$ bis $\lambda_4$ die oben genannten Bedingungen nicht mehr erfüllen.

**Zweites Ausführungsbeispiel**

Das zweite Ausführungsbeispiel ist eine weiterentwickelte Ausgestaltung des ersten. Die Eigenschaften des Übertragungskanals können zeitweilig so beschaffen sein, dass nur eine dominate Einfallsrichtung vorliegt, aus der das Signal der Basisstation BS die Teilnehmerstation MS erreicht. Beispielsweise existiert eine Sichtverbindung (line of sight) zwischen beiden Stationen, und Mehrwegausbreitung kann vernachlässigt werden oder die Signale erreichen die Mobilstation über Streuer in der Nähe der Mobilstation, welche von der Basisstation gesehen alle im wesentlichen in der gleichen Richtung liegen. Fig. 2c zeigt eine typische Größenverteilung der Eigenwerte in einem solchen Fall. Der Eigenwert $\lambda_1$, der dem direkten Übertragungsweg entspricht, übertrifft die anderen Eigenwerte in der Größe bei weitem. Wenn das Verhältnis von $\lambda_1$ zum nächstkleineren Eigenwert $\lambda_2$ einen vorgegebenen Grenzwert überschreitet oder $\lambda_2 <$ No gilt, geht die Teilnehmerstation MS in einen dritten Betriebszustand über und überträgt eine Steuerinformation an die Basisstation BS, die diese von dem Übergang in Kenntnis setzt. Die Basisstation BS verwendet daraufhin für die Strahlenformung einen dritten "Satz" von Basisgewichtungsvektoren, der lediglich den Vektor $s_1$ enthält. D.h. $s_1$ wird so lange von der Basisstation BS als aktueller Gewichtungsvektor verwendet, bis eine vorgegebene Zeitdauer des dritten Betriebszustandes abgelaufen ist, ohne dass diese durch erneute Übertragung der Steuerinformation verlängert wurde, oder bis die Teilnehmerstation eine Steuerinformation überträgt, die ihre Rückkehr in einen anderen Betriebszustand ankündigt.

So lange der dritte Betriebszustand andauert, ist es nicht notwendig, die Rückkopplungsinformation zu übertragen, denn diese kann lediglich den Vektor $s_1$ als aktuellen Gewichtungsvektor spezifizieren.

Die nicht für die Übertragung der Rückkopplungsinformation benötigte Bandbreite wird zweckmäßigerweise für andere Aufgaben genutzt. So ist es z.B. möglich, anstelle der Rückkopplungsinformation die Zahlenwerte der einzelnen Komponenten des Vektors $s_1$ mit hoher Auflösung zu übertragen.

Alternativ kann der Übergang der Teilnehmerstation MS in den dritten Betriebszustand auch im Rahmen einer Aktualisierung der Basisgewichtungsvektoren der Basisstation erfolgen. Hierzu kann nach Übertragung der Komponenten des Vektors $s_1$ anstelle des Vektors $s_2$ eine vordefinierte Bitfolge übertragen werden, anhand derer die Basisstation erkennt, dass nur ein gültiger Gewichtungsvektor übertragen wird. Eine andere Möglichkeit ist, den Basisgewichtungsvektor $s_1$ im Rahmen einer Aktualisierung der Basisgewichtungsvektoren zweimal zu übertragen, einmal an der im ersten oder zweiten Betriebszustand für die Übertragung von $s_1$ vorgesehenen Stelle, das andere Mal anstelle von $s_2$. Indem die Basisstation BS jeweils den anstelle von $s_1$ bzw. $s_2$ empfangenen Vektor miteinander vergleicht, ist sie in der Lage, festzustellen, ob sich die Teilnehmerstation im ersten oder zweiten Betriebszustand einerseits oder im dritten Betriebszustand andererseits befindet.

**Drittes Ausführungsbeispiel**

Das dritte Ausführungsbeispiel hat die Eigenschaften der ersten Ausgestaltung mit den folgenden Weiterentwicklungen bzw. Abwandlungen: Wenn die Teilnehmerstation MS bei einer Neuberechnung der Eigenvektoren $s_1$ ..., $s_M$ und ihrer Eigenwerte $\lambda_1$ ... $\lambda_M$ feststellt, dass der Eigenwert $\lambda_1$ deutlich größer als alle anderen ist, wie in Fig. 2c gezeigt, so übermittelt sie an die Basisstation BS das Steuerbit, welches angibt, dass sich die Teilnehmerstation MS im zweiten Betriebszustand befindet. Anstatt aber die zwei Basisgewichtungsvektoren $s_1$, $s_2$ zu übertragen, aus denen die Teilnehmerstation den zweiten Satz von Basisgewichtungsvektoren bildet, überträgt die Teilnehmerstation MS zweimal nacheinander den Vektor $s_1$.

Die Basisstation BS vergleicht die nacheinander empfangenen Basisgewichtungsvektoren. Wenn beide identisch sind, so erkennt die Basisstation hieran, dass die Teilnehmerstation MS eine Line-of-Sight-Übertragung erkannt hat und bis zur Rückkehr in den ersten Betriebszustand keine Rückkopplungsinformation liefern wird.

Wenn bei der Übertragung der Eigenvektoren zur Basisstation ein Fehler auftritt, so verfügt die Basisstation anschließend über eine korrekte Version $s_1$ und eine verfälschte Version $s_{1,f}$. Die Basisstation erkennt daher nicht, dass sich die Teilnehmerstation MS im dritten Betriebszustand befindet und arbeitet im zweiten Betriebszustand, wie mit Bezug auf das erste Ausführungsbeispiel beschrieben. D.h. sie wählt jeweils einen aktuellen Gewichtungsvektor $w = s_1 + e^{1\varphi} s_{1,f}$ aus, wobei der Wert von $\varphi$ jeweils durch von der Teilnehmerstation MS übertragene, von der Basisstation fälschlich als Rückkopplungsinformation ausgewertete Information festgelegt wird. Fehler bei der Übertragung des Basisgewichtungsvektors $s_1$ können sich hier nicht gravierend auswirken, da der von der Basisstation BS verwendete aktuelle Gewichtungsvektor stets eine Linearkombination des korrekten und des fehlerhaften Gewichtungsvektors ist.

Wenn der Basisgewichtungsvektor $s_1$ tatsächlich fehlerhaft übertragen worden ist, und die Basisstation BS zeitlich wechselnde Linearkombinationen des korrekt übertragenen und des fehlerhaft übertragenen Vektors $s_1$ bzw. $s_{l,f}$ verwendet, so macht sich dies an der Teilnehmerstation MS durch eine Variabilität der Phase des empfangenen Signals bemerkbar. Einer Weiterbildung zufolge kann vorgesehen werden, dass die Teilnehmerstation MS anhand dieser Variabilität auf das Auftreten eines Übertragungsfehlers rückschließt und daraufhin gezielt diejenige Rückkopplungsinformation an die Basisstation liefert, die unter den vier Basisgewichtungsvektoren $s_1 + s_{1,f}$, $s_1 + j s_{1,f}$, $s_1 - s_{1,f}$, $s_1 - j s_{1,f}$ des zweiten Satzes denjenigen spezifiziert, der den bestmöglichen Empfang erlaubt.

**Viertes Ausführungsbeispiel**

Das vierte Ausführungsbeispiel ist eine Vereinfachung des ersten: Anstatt die Basisgewichtungsvektoren anhand von Kanalschätzungen zu berechnen, werden einfach vordefinierte, unveränderliche Basisgewichtungsvektoren, z.B. $s_1 = (1,0,0,0)$, $s_2 = (0,1,0,0)$, $s_3 = (0, 0, 1, 0)$, $s_4 = (0,0,0,1)$ als erster Satz verwendet. Der zweite Satz wird aus den Vektoren $s_1$, $s_2$ nach den gleichen Regeln wie beim ersten Ausführungsbeispiel gebildet.

**Fünftes Ausführungsbeispiel**

Auch hier verfügen Teilnehmerstation MS und Basisstation BS über zwei Betriebszustände, wobei der erste mit dem des ersten Ausführungsbeispiels identisch ist. Auch die Bedingungen für eine Umschaltung zwischen den zwei Betriebszuständen sind die gleichen wie für das erste Ausführungsbeispiel beschrieben. Der im zweiten Betriebszustand zur Verfügung stehende zweite Satz von Gewichtungsvektoren umfasst die Vektoren $s_1$, $s_2$, $a_1 s_1 + b_1 s_2$, $a_2 s_1 - b_2 s_2$. Die Vektoren $s_1$, $s_2$ sind sowohl im ersten als auch im zweiten Satz enthalten. $a_i$, $b_i$, $i = 1, 2$ sind reelle oder komplexe Konstanten, vorzugsweise gilt $|a_i|^2 + |b_i|^2 = 1$, insbesondere $a_i = b_i = 2^{-1/2}$. Mit Hilfe von zwei Bit Rückkopplungsinformation signalisiert die Teilnehmerstation MS der Basisstation BS, welcher dieser vier Vektoren als aktueller Gewichtungsvektor für die Strahlformung verwendet werden soll.

**Sechstes Ausführungsbeispiel**

Das sechste Ausführungsbeispiel hat die gleichen Eigenschaften wie das fünfte und weist zusätzlich die mit Bezug auf das dritte Ausführungsbeispiel beschriebenen Weiterentwicklungen auf. Wenn $\lambda_1$ deutlich größer als alle anderen Eigenwerte ist und $s_1$ zweimal nacheinander übertragen wird, so steht der Basisstation BS im Falle eines Übertragungsfehlers ein zweiter Satz von Basisgewichtungsvektoren mit den Elementen $\{s_1, s_{1,f}, a_1 s_1 + b_1 s_{1,f}, a_2 s_1 - b_2 s_{1,f}\}$ zur Verfügung. Durch Übertragen der geeigneten Rückkopplungsinformation kann in diesem Fall die Teilnehmerstation MS die Basisstation BS veranlassen, nur den korrekt übertragenen Basisgewichtungsvektor als aktuellen Gewichtungsvektor zu verwenden.

**Siebtes Ausführungsbeispiel**

Erster Betriebszustand und Bedingungen für die Umschaltung sind die gleichen wie beim ersten Ausführungsbeispiel; der im zweiten Betriebszustand zur Verfügung stehende Satz von Gewichtungsvektoren umfasst lediglich die Vektoren $s_1$, $s_2$. Ein Codewort der Rückkopplungsinformation umfasst im ersten wie im zweiten Betriebszustand zwei Bits, wobei im zweiten Betriebszustand eine redundante Codierung des zu verwendenden Gewichtungsvektors erfolgt, z.B. durch zweifache Übertragung des gleichen Bits. So kann ein Codewort 11 für die Verwendung des Vektors $s_1$, ein Codewort 00 für die Verwendung des Vektors $s_2$ stehen.

**Achtes Ausführungsbeispiel**

Erster Betriebszustand und Bedingungen für die Umschaltung sind die gleichen wie im Ausführungsbeispiel 1. Der zweite Satz von Gewichtungsvektoren hat die Elemente $\mathbf{s}_1+e^{j\pi}\mathbf{s}_2$, $\mathbf{s}_1+e^{j(\pi+\phi)}\mathbf{s}_2$, wobei $\phi$ eine beliebige konstante Phase ist. Die Auswahl eines Gewichtungsvektors des zweiten Satzes erfolgt durch Übertragung eines zwei Bit-Codeworts mit einem redundanten Bit, wie beim dritten Ausführungsbeispiel.

Bei dieser Variante basieren zwar beide Sätze von Gewichtungsvektoren auf den gleichen Eigenvektoren, dennoch enthalten sie keine gleichen Elemente.

**Neuntes Ausführungsbeispiel**

Erster Betriebszustand und Bedingungen für die Umschaltung sind die gleichen wie beim ersten Ausführungsbeispiel. Der zweite Satz von Gewichtungsvektoren hat zwei Elemente, z.B. $\mathbf{s}_1$ und $\mathbf{s}_2$ oder $\mathbf{s}_1+\mathbf{s}_2$ und $\mathbf{s}_1-\mathbf{s}_2$, und zur Festlegung des von der Basisstation zu verwendenden Gewichtungsvektors überträgt die Teilnehmerstation im zweiten Betriebszustand ein einziges Rückkopplungsbit, so dass die Aktualisierung des Gewichtungsvektors nach jedem einzelnen übertragenen Rückkopplungsbit erfolgen kann.

**Zehntes Ausführungsbeispiel**

Ein erster Betriebszustand von Basisstation und Teilnehmerstation ist der gleiche wie beim ersten Ausführungsbeispiel. Darüber hinaus existieren zwei oder drei zweite Betriebszustände, die jeweils einem der oben beschriebenen zweiten Betriebszustände entsprechen können, und es sind Bedingungen für das Umschalten zwischen den diversen Betriebszuständen definiert. Der von der Teilnehmerstation MS an die Basisstation übertragene Umschaltbefehl umfasst zwei Bits zum Spezifizieren der bis zu vier verschiedenen möglichen Betriebszustände.

**Elftes Ausführungsbeispiel**

Beim Umschalten zwischen zwei Betriebszuständen ist sicherzustellen, dass Basisstation BS und Teilnehmerstation MS zum selben Zeitpunkt umschalten, da sonst die Rückkopplungsinformation falsch interpretiert werden könnte. Zu diesem Zweck vereinbaren Basisstation und Teilnehmerstation nach Übertragung eines Umschaltbefehls einen festen Zeitpunkt, zu dem beide gleichzeitig die Umschaltung vornehmen. Dies kann z.B. dadurch erfolgen, dass die Basisstation BS der Teilnehmerstation MS den Empfang des Befehls durch eine Rückmeldung quittiert, die eine Nummer eines Rahmens des zwischen ihnen übertragenen Signals spezifiziert, zu dem die Basisstation BS bereit ist, die Umschaltung vorzunehmen. Alternativ kann bereits der Befehl der MS eine solche Rahmennummer enthalten.

**Zwölftes Ausführungsbeispiel**

Basisstation BS und Teilnehmerstation MS können zwei Betriebszustände einnehmen, in denen jeweils ein erster bzw. zweiter Satz von Gewichtungsvektoren verwendet wird. Der erste Satz umfasst die Vektoren $\mathbf{s}_1$, $\mathbf{s}_2$, $\mathbf{s}_3$, $\mathbf{s}_4$; der zweite Satz die Vektoren $\mathbf{s}_1$, $\mathbf{s}_2$, $\mathbf{s}_1+\mathbf{s}_2$, $\mathbf{s}_1-\mathbf{s}_2$. Die zwei gemeinsamen Elemente $\mathbf{s}_1$, $\mathbf{s}_2$ der zwei Sätze entsprechen den Eigenvektoren der Kovarianzmatrix mit den größten Eigenwerten $\lambda_1$, $\lambda_2$. Im ersten wie im zweiten Betriebszustand sind Codewörter der Rückkopplungsinformation von zwei Bit Länge erforderlich, um den zu verwendenden Gewichtungsvektor zu spezifizieren. Dabei ist das Codewort "00" in beiden Betriebszuständen dem Vektor $\mathbf{s}_1$ und das Codewort "11" dem Vektor $s_2$ zugeordnet.

Wenn die Teilnehmerstation MS feststellt, dass die Bedingungen für die Umschaltung vom ersten in den zweiten Betriebszustand, z.B. die mit Bezug auf das erste Ausführungsbeispiel angegebenen Bedingungen, erfüllt sind, sendet sie einen Befehl zum Umschalten des Betriebszustandes an die Basisstation BS. Dann hört sie auf, als Rückkopplungsinformation die den Vektoren $\mathbf{s}_3$, $\mathbf{s}_4$ zugeordneten Codewörter "01" und "10" zu übertragen. D.h. selbst wenn eine Messung der Teilnehmerstation MS ergibt, dass unter den vier Vektoren $\mathbf{s}_1$, $\mathbf{s}_2$, $\mathbf{s}_3$, $\mathbf{s}_4$ des ersten Satzes der Vektor $\mathbf{s}_3$

als Gewichtungsvektor am besten geeignet wäre, wählt die Teilnehmerstation den Gewichtungsvektor, den sie anschließend der Basisstation über die Rückkopplungsinformation spezifiziert, nur noch unter $s_1$ und $s_2$ aus.

Der Zeitpunkt, an dem die Teilnehmerstation MS die Auswahl der Codewörter in der oben beschriebenen Weise einschränkt, kann der gleiche sein, an dem sie den Befehl zum Umschalten des Betriebszustandes an die Basisstation sendet. In Anbetracht der Tatsache, dass die Basisstation eine feste Mindestzeit zwischen dem Empfang dieses Befehls und seiner Umsetzung benötigt, kann der Zeitpunkt der Einschränkung auch entsprechend später festgelegt werden, d.h. solange die Basisstation den Befehl nicht umgesetzt haben kann, wählt die Teilnehmerstation MS die als Rückkopplungsinformation übertragenen Codewörter aus dem kompletten ersten Satz.

Die Basisstation BS kann, wenn sie den Umschaltbefehl von der Teilnehmerstation MS empfangen hat, zu einem beliebigen Zeitpunkt in den zweiten Betriebszustand wechseln. Da die Teilnehmerstation nach Senden des Umschaltbefehls spätestens nachdem die Basisstation den Befehl umgesetzt haben könnte, nur noch die Codewörter "00", "11" liefert, die in beiden Betriebszuständen die gleichen Gewichtungsvektoren $s_1$, $s_2$ spezifizieren, ist sichergestellt, dass die Basisstation BS sowohl vor als auch nach ihrem Übergang vom ersten in den zweiten Betriebszustand den von der Teilnehmerstation MS spezifizierten Gewichtungsvektor verwendet.

Nach ihrem Übergang in den zweiten Betriebszustand sendet die Basisstation BS eine Quittungsmeldung an die Teilnehmerstation MS. Nachdem diese die Quittungsmeldung empfangen hat, "weiß" sie, dass die Basisstation BS wie angefordert in den zweiten Betriebszustand übergegangen ist, so dass sie ab diesem Zeitpunkt auch bei Bedarf die Codewörter "01", "10" als Rückkopplungsinformation überträgt, um einen der Gewichtungsvektoren $s_1$+$s_2$, $s_1$-$s_2$ zu spezifizieren.

Da bei dieser Ausgestaltung im Zeitraum zwischen dem Senden des Umschaltbefehls und dem Empfang der Quittungsmeldung die Möglichkeiten der Teilnehmerstation, einen Gewichtungsvektor zu spezifizieren, eingeschränkt sind, ergibt sich für diesen Zeitraum theoretisch eine geringfügige Leistungseinbuße. Diese fällt aber in der Praxis nicht ins Gewicht, da eine Umschaltung in den zweiten Betriebszustand ohnehin nur dann vorgenommen wird, wenn die Häufigkeit, mit der die Teilnehmerstation einen der Eigenvektoren $s_3$, $s_4$ selektiert, sehr gering ist. Daher ist die Einbuße, wenn sie überhaupt auftritt, wesentlich geringer als eine Einbuße, die resultieren würde, wenn in diesem Zeitraum die Teilnehmerstation z.B. das Codewort "01" übertragen würde, um einen Gewichtungsvektor $s_1$+$s_2$ zu spezifizieren und die Basisstation statt dessen den Gewichtungsvektor $s_3$ verwenden würde.

Der entscheidende Vorteil dieser Vorgehensweise liegt darin, dass sie eine Umschaltung zwischen den Betriebszuständen mit minimaler Verzögerung erlaubt.

**Dreizehntes Ausführungsbeispiel**

Dieses Ausführungsbeispiel unterscheidet sich vom zwölften dadurch, dass der zweite Satz von Gewichtungsvektoren lediglich die Vektoren $s_1$, $s_2$ umfasst, und dass, um sie zu spezifizieren, jeweils ein Codewort von einem Bit Breite von der Teilnehmerstation MS an die Basisstation BS übertragen wird. Auch hier liefert die Teilnehmerstation MS nach Aussendung des Umschaltbefehls so lange nur die zwei-Bit-Codewörter "00", "11" an die Basisstation, bis sie von dieser die Quittungsmeldung über den vollzogenen Übergang in den zweiten Betriebszustand erhalten hat. Wenn sie nach Erhalt der Quittungsmeldung Rückkopplungsbits "01" an die Basisstation liefert, so werden diese jeweils als ein Bit breite Codewörter ausgewertet, die nacheinander die Gewichtungsvektoren $s_1$, $s_2$ für jeweils die Dauer eines Zeitschlitzes spezifizieren.

Bei dieser Ausgestaltung beinhaltet also der Übergang vom ersten zum zweiten Betriebszustand eine Beschränkung der Anzahl von zur Verfügung stehenden Gewichtungsvektoren, andererseits aber eine schnellere Aktualisierung der verwendeten Gewichtungsvektoren. Auch hier wird zunächst eine Beschränkung der Auswahl ohne die Möglichkeit einer schnelleren Aktualisierung ab dem Zeitpunkt in Kauf genommen, wo die Teilnehmerstation MS den Umschaltbefehl sendet, um dadurch ab dem frühest möglichen Zeitpunkt, zu dem die Basisstation BS die Umschaltung vornehmen kann, in den Genuss der schnelleren Aktualisierung zu kommen.

**Vierzehntes Ausführungsbeispiel**

Bei allen bisherigen Ausführungsbeispielen wurde von einem ersten Satz von vier Gewichtungsvektoren ausgegangen. Selbstverständlich ist das Verfahren ohne weiteres auch auf größere Sätze von Gewichtungsvektoren verallgemeinerbar. So kann z.B. im ersten Betriebszustand ein Satz von sechzehn Gewichtungsvektoren $w_1$, $w_2$, ..., $w_{16}$ verwendet werden, von denen die Vektoren $w_1$ bis $w_4$ auch den vierelementigen zweiten Satz von Gewichtungsvektoren bilden. Im ersten Betriebszustand werden vier Bit breite Codewörter als Rückkopplungsinformation zum Spezifizieren eines Gewichtungsvektors benötigt, im zweiten Betriebszustand genügen Codewörter von zwei Bit Breite. Die nachfolgende Tabelle zeigt die Zuordnung von Codewörtern im ersten und zweiten Betriebszustand zu den Gewichtungsvektoren. Man erkennt, dass den Gewichtungsvektoren $w_1$ bis $w_4$ im ersten Betriebszustand Vier-Bit-Codewörter zugeordnet sind, die sich jeweils durch eine Verdopplung ihrer Zwei-Bit-Codewörter des zweiten Betriebszustands ergeben.

| zweiter Satz | | Codewort (2 Bit) | Zugeordneter Gewichtungsvektor |
|---|---|---|---|
| | | 00 | $\mathbf{w}_1$ |
| | | 11 | $\mathbf{w}_2$ |
| | | 01 | $\mathbf{w}_3$ |
| | | 10 | $\mathbf{w}_4$ |
| | | | |
| erster Satz | | Codewort (4 Bit) | Zugeordneter Gewichtungsvektor |
| | mit S.2 kompatibel | 0000 | $\mathbf{w}_1$ |
| | | 1111 | $\mathbf{w}_2$ |
| | | 0101 | $\mathbf{w}_3$ |
| | | 1010 | $\mathbf{w}_4$ |
| | mit S.2 inkompatibel | 0001 | $\mathbf{w}_5$ |
| | | 0010 | $\mathbf{w}_6$ |
| | | 0011 | $\mathbf{w}_7$ |
| | | 0100 | $\mathbf{w}_8$ |
| | | 0110 | $\mathbf{w}_9$ |
| | | 0111 | $\mathbf{w}_{10}$ |
| | | 1000 | $\mathbf{w}_{11}$ |
| | | 1001 | $\mathbf{w}_{12}$ |
| | | 1011 | $\mathbf{w}_{13}$ |
| | | 1100 | $\mathbf{w}_{14}$ |
| | | 1101 | $\mathbf{w}_{15}$ |
| | | 1110 | $\mathbf{w}_{16}$ |

Eine Umschaltung vom ersten zum zweiten Betriebszustand ist in der gleichen Weise möglich, wie beim zwölften Ausführungsbeispiel beschrieben. Nach Senden des Umschaltbefehls werden die Codewörter der Vektoren $\mathbf{w}_5$ bis $\mathbf{w}_{16}$ nicht mehr verwendet, und die Codewörter der Vektoren $\mathbf{w}_1$ bis $\mathbf{w}_4$ werden von der Basisstation BS jeweils in gleicher Weise korrekt ausgewertet, unabhängig davon, ob sie sich noch im ersten Betriebszustand befindet, oder schon in den zweiten umgeschaltet ist.

Das Ausführungsbeispiel ist ohne Schwierigkeiten auf den Fall verallgemeinerbar, dass die Länge der Codewörter im ersten Betriebszustand ein ganzzahliges Vielfaches der Länge im zweiten Betriebszustand ist.

**Fünfzehntes Ausführungsbeispiel**

Dieses Ausführungsbeispiel betrifft den Fall, dass die Länge der Codewörter im ersten Betriebszustand kein ganzzahliges Vielfaches der Länge im zweiten Betriebszustand ist. Betrachtet wird konkret der Fall, dass im ersten Betriebszustand acht Gewichtungsvektoren mit Drei-Bit-Codewörtern und im zweiten Betriebszustand vier Gewichtungsvektoren mit Zwei-Bit-Codewörtern codiert werden. Der erste Satz von Gewichtungsvektoren enthält Vektoren $\mathbf{w}_1$ bis $\mathbf{w}_8$, von denen die Vektoren $\mathbf{w}_1$, bis $\mathbf{w}_4$ auch im zweiten Satz enthalten sind. Ihnen sind, wie im Beispiel 10, Zwei-Bit-Codewörter gemäß folgender Tabelle zugeordnet.

| zweiter Satz | Codewort (2 Bit) | | Zugeordneter Gewichtungsvektor |
|---|---|---|---|
| | Zeitschlitz Nr 0, 2, ... 1, 3, ... | | |
| | 0 | 0 | $w_1$ |
| | 1 | 1 | $w_2$ |
| | 0 | 1 | $w_3$ |
| | 1 | 0 | $w_4$ |

Im ersten Betriebszustand entsprechen ihnen folgende Codewörter:

| erster Satz | Codewort (3 Bit) | | | | | | Zugeordneter Gewichtungsvektor |
|---|---|---|---|---|---|---|---|
| | Zeitschlitz Nr 0,6, ... 1,. 2,. 3,. 4,. 5,. | | | | | | |
| | 0 | 0 | 0 | | | | $w_1$ |
| | 0 | 1 | 0 | | | | $w_2$ |
| | 1 | 0 | 1 | | | | $w_3$ |
| | 1 | 1 | 1 | | | | $w_4$ |
| | | | | | | | |
| | | | | 0 | 0 | 0 | $w_1$ |
| | | | | 1 | 0 | 1 | $w_2$ |
| | | | | 0 | 1 | 0 | $w_3$ |
| | | | | 1 | 1 | 1 | $w_4$ |

Die Codierung der Vektoren $w_2$, $w_3$ ist im ersten Betriebszustand unterschiedlich, je nach dem, ob die Übertragung des Codewortes in einem geradzahligen oder einem ungeradzahligen Zeitschlitz (Zeitschlitz Nr. 0, 6, ... oder Nr. 3, ...) beginnt. Die Codewörter des ersten Satzes können aus denen des zweiten Satzes erhalten werden, in dem letztere zwei Mal hintereinander geschrieben werden und dann im Falle eines mit einem geradzahligen Zeitschlitz beginnenden Codewort das letzte der vier Bits des erhaltenen Ergebnisses abgeschnitten wird, während bei einem ungeradzahligen Zeitschlitz das erste Bit abgeschnitten wird. Durch diese Maßnahme ist sichergestellt, dass eine Rückkopplungsinformation, die aus einer alternierenden Folge von Nullen und Einsen besteht, sowohl im ersten wie auch im zweiten Betriebszustand korrekt als spezifizierter Gewichtungsvektor $w_2$ bzw. $w_3$ interpretiert wird.

Die Zuordnung der nicht für die Vektoren $w_1$ bis $w_4$ benötigten Drei-Bit-Codewörter an die Vektoren $w_5$, $w_8$ kann in willkürlicher Weise erfolgen.

## Patentansprüche

1. Verfahren zum Steuern der Strahlformung eines von einer mit einer Mehrzahl von Antennen ($A_1$, ... $A_M$) ausgerüsteten ersten Station (BS) an eine zweite Station (MS) übertragenen Funksignals, bei dem die erste Station (BS) anhand einer von der zweiten Station (MS) gelieferten Rückkopplungsinformation einen aktuellen Gewichtungsvektor (w) aus einem ersten Satz von Basisgewichtungsvektoren wählt und jede Antenne ($A_1$, ... $A_M$) mit dem zu sendenden Funksignal, multipliziert mit einer der Antenne ($A_1$, ... $A_M$) zugeordneten Komponente des aktuellen Gewichtungsvektors, beaufschlagt wird, **dadurch gekennzeichnet dass** ein zweiter Satz von Basisgewichtungsvektoren definiert wird, und wobei eine Information über den Satz, aus dem der aktuelle Gewichtungsvektor auszuwählen ist, zwischen den zwei Stationen (MS, BS) übermittelt wird,
und
die Rückkopplungsinformation eine Bitfolge umfasst, die von der ersten Station (BS) bei Verwendung des ersten Satzes von Basisgewichtungsvektoren in eine Folge von ersten Codewörtern mit einer ersten Bitzahl und bei Verwendung des zweiten Satzes von Basisgewichtungsvektoren in eine Folge von zweiten Codewörtern mit einer zweiten Bitzahl zerlegt wird, wobei die möglichen Werte der ersten Codewörter dem ersten Satz von Basisgewichtungsvektoren und die möglichen Werte der zweiten Codewörter dem zweiten Satz von Basisgewichtungsvektoren entsprechen, und dass der zweite Satz von Basisgewichtungsvektoren Elemente enthält, die auch Element des ersten Satzes sind und denen jeweils ein zweites Codewort zugeordnet ist, das in dem dem gleichen Element zugeordneten ersten Codewort enthalten ist.

2. Verfahren nach Anspruch 1, **dadurch gekennzeichnet, dass** die Basisgewichtungsvektoren eines Satzes sämtlich linear unabhängig sind.

3. Verfahren nach Anspruch 1 oder 2, **dadurch gekennzeichnet, dass** wenigstens einige der Basisgewichtungsvektoren eines der Sätze gebildet werden durch Festlegen einer ersten Zahl linear unabhängiger Basisgewichtungsvektoren und Aufnehmen einer zweiten Anzahl von Linearkombinationen der ersten Zahl von Basisgewichtungsvektoren in den Satz.

4. Verfahren nach Anspruch 1, 2 oder 3, **dadurch gekennzeichnet, dass** der zweite Satz weniger Basisgewichtungsvektoren als der erste enthält.

5. Verfahren nach Anspruch 1,2, 3 oder 4, **dadurch gekennzeichnet, dass** die Basisgewichtungsvektoren wenigstens eines der Sätze von der zweiten Station (MS) anhand des von der ersten Station (BS) ausgestrahlten Funksignals festgelegt und an die erste Station (BS) übermittelt werden.

6. Verfahren nach Anspruch 1, 2, 3 oder 4, **dadurch gekennzeichnet, dass** die Basisgewichtungsvektoren wenigstens eines der Sätze von der ersten Station anhand eines von der zweiten Station gesendeten Funksignals festgelegt und an die zweite Station übermittelt werden.

7. Verfahren nach einem der vorhergehenden Ansprüche, **dadurch gekennzeichnet, dass** der erste Satz aus fest vorgegebenen, unveränderlichen Basisgewichtungsvektoren gebildet wird.

8. Verfahren nach einem der Ansprüche 1 bis 6, **dadurch gekennzeichnet, dass** die Basisgewichtungsvektoren des ersten und/oder des zweiten Satzes als Eigenvektoren der Kovarianzmatrix des Übertragungskanals zwischen den zwei Stationen oder als Linearkombinationen dieser Eigenvektoren erhalten werden.

9. Verfahren nach Anspruch 8, **dadurch gekennzeichnet, dass** die Basisgewichtungsvektoren des ersten Satzes als Eigenvektoren ($s_1$, $s_2$,..., $s_N$) der Kovarianzmatrix (R) des Übertragungskanals zwischen den zwei Stationen (BS, MS) erhalten werden und dass der zweite Satz Linearkombinationen bestimmter Vektoren ($s_i$, $s_j$ mit i,j $\in$ {1,2,..., N} ) des ersten Satzes enthält.

10. Verfahren nach Anspruch 9, **dadurch gekennzeichnet, dass** der zweite Satz ferner die bestimmten Vektoren enthält.

11. Verfahren nach Anspruch 9 oder 10, **dadurch gekennzeichnet, dass** die bestimmten Vektoren diejenigen Eigenvektoren der Kovarianzmatrix sind, die die größten Eigenwerte aufweisen.

12. Verfahren nach einem der Ansprüche 9 bis 11, **dadurch gekennzeichnet, dass** der zweite Satz verwendet wird, wenn die Eigenwerte ($\lambda_1$, $\lambda_2$) der bestimmten Vektoren ($s_1$, $s_2$) die Eigenwerte ($\lambda_3$, $\lambda_4$) der nicht bestimmten Vektoren des ersten Satzes um einen gegebenen Faktor überschreiten und/oder wenn die Eigenwerte ($\lambda_3$, $\lambda_4$) der nicht bestimmten Vektoren ($s_3$, $s_4$) unterhalb eines gegebenen Schwellwerts (No) liegen.

13. Verfahren nach Anspruch 5 und Anspruch 12, **dadurch gekennzeichnet, dass** der zweite Satz an der ersten Station (BS) definiert wird durch zweimaliges Übermitteln des Basisgewichtungsvektors mit dem größten Eigenwert von der zweiten Station (MS) an die erste Station (BS), so dass der zweite Satz an der ersten Station bei fehlerfreier Übermittlung zwei gleiche Basisgewichtungsvektoren enthält.

14. Verfahren nach Anspruch 13, **dadurch gekennzeichnet, dass** im Falle eines Fehlers bei einer der Übermittlungen des einen Basisgewichtungsvektors die zweite Station (MS) denjenigen Wert der Rückkopplungsinformation an die erste Station (BS) liefert, die den bestmöglichen Empfang des Funksignals erlaubt.

15. Verfahren nach Anspruch 14, **dadurch gekennzeichnet, dass** der an der ersten Station (BS) definierte zweite Satz einen korrekt übermittelten Basisgewichtungsvektor ($s_1$) und einen fehlerhaft übermittelten Basisgewichtungsvektor ($s_{1,f}$) enthält, die zweite Station (MS) denjenigen Wert der Rückkopplungsinformation an die erste Station (BS) liefert, der diese veranlasst, den korrekt übermittelten Basisgewichtungsvektor ($s_1$) als aktuellen Gewichtungsvektor zu verwenden.

**16.** Verfahren nach einem der Ansprüche 1 bis 8, **dadurch gekennzeichnet, dass** der zweite Satz einen einzigen Basisgewichtungsvektor enthält.

**17.** Verfahren nach Anspruch 16, **dadurch gekennzeichnet, dass** die Übertragung der Rückkopplungsinformation unterbleibt, solange der zweite Satz verwendet wird.

**18.** Verfahren nach Anspruch 1, **dadurch gekennzeichnet, dass** die erste und die zweite Bitzahl gleich sind und das erste und zweite Codewort eines im ersten und im zweiten Satz von Basisgewichtungsvektoren vorkommenden Elements ($s_1$, $s_2$) identisch sind.

**19.** Verfahren nach Anspruch 1, **dadurch gekennzeichnet, dass** die erste Bitzahl das n-fache der zweiten Bitzahl ist, wobei n eine natürliche Zahl und größer als 1 ist, und dass das erste Codewort eines im ersten und im zweiten Satz von Basisgewichtungsvektoren vorkommenden Elements durch n-faches Wiederholen des zweiten Codeworts gebildet wird.

**20.** Verfahren nach Anspruch 1, **dadurch gekennzeichnet, dass** die erste Bitzahl zwischen dem n-fachen und dem (n-1)-fachen der zweiten Bitzahl beträgt, wobei n eine natürliche Zahl und größer als 1 ist, und dass das erste Codewort eines im ersten und im zweiten Satz von Basisgewichtungsvektoren vorkommenden Elements durch n-faches Wiederholen des zweiten Codeworts und Abschneiden des Ergebnisses auf die erste Bitzahl gebildet wird.

**21.** Verfahren nach Anspruch 20, **dadurch gekennzeichnet, dass** dass das Ergebnis periodisch vorne und/oder hinten abgeschnitten wird.

**22.** Verfahren nach einem der Ansprüche 1 bis 21, **dadurch gekennzeichnet, dass** zum Übergehen von der Verwendung des ersten Satzes von Gewichtungsvektoren auf den zweiten Satz oder umgekehrt die zweite Station einen Befehl an die erste Station sendet und die erste Station eine Bestätigung an die zweite Station sendet, wenn sie den Befehl befolgt, und die zweite Station in einem Zeitintervall nach dem Senden des Befehls und vor dem Empfang der Bestätigung in der an die erste Station gesendeten Rückkopplungsinformation nur solche Gewichtungsvektoren spezifiziert, die sowohl im ersten als auch im zweiten Satz von Gewichtungsvektoren vorkommen.

**23.** Verfahren nach einem der Ansprüche 1 bis 22, **dadurch gekennzeichnet, dass** Codewörter des ersten Satzes, die durch Wiederholen und ggf. Abschneiden von Codewörtern des zweiten Satzes bildbar sind, den am häufigsten verwendeten Gewichtungsvektoren zugeordnet werden.

**24.** Verfahren nach einem der Ansprüche 1 bis 22 und Anspruch 8, **dadurch gekennzeichnet, dass** Codewörter des ersten Satzes, die durch Wiederholen und ggf. Abschneiden von Codewörtern des zweiten Satzes bildbar sind, den Eigenvektoren mit dem höchsten Eigenwert zugeordnet werden.

**25.** System zur Durchführung des Verfahrens nach einem der vorhergehenden Ansprüche, **gekennzeichnet durch** einen Speicher für zwei Sätze von Basisgewichtungsvektoren, aus denen die aktuellen Gewichtungsvektoren bestehen oder erzeugbar sind.

**26.** Station (MS, BS) des vorstehenden Systems, umfassend Mittel zur Durchführung eines Verfahrens nach einem der vorstehenden Verfahrensansprüche, die so eingerichtet sind, dass bei Durchführung desjenigen Teils des Verfahrens, der von der Station bewirkt wird, zwangsläufig das gesamte Verfahren bewirkt wird.

## Claims

**1.** A method for controlling the beam shaping of a radio signal transmitted from a first station (BS) equipped with a multiplicity of antennas ($A_1$, ... $A_M$) to a second station (MS), in which the first station (BS) selects a current weighting vector (w) from a first set of basic weighting vectors by means of feedback information supplied by the second station (MS) and the radio signal to be transmitted, multiplied by a component of the current weighting vector, allocated to the antenna ($A_1$, ... $A_M$) is applied to each antenna ($A_1$, ... $A_M$), **characterized in that** a second set of basic weighting vectors is defined and wherein an information about the set from which the current weighting vector is to be selected is transmitted between the two stations (MS, BS), and the feedback information comprises a bit sequence which is split up into a sequence of first code words with a first number of bits by the first station (BS) when the first set of basic weighting vectors is used and is split into a sequence of second code words with a second number of bits when the second set of basic weighting vectors is used, wherein the possible values of the first code words correspond to the first set of basic weighting vectors and the possible values of second code words corresponds to the second set of basic weighting vectors, **in that** the second set of basic weighting vectors contains elements which are also elements of the first set and to which in each case a second code word is allocated which is contained in the first code word allocated to the same element.

2. The method as claimed in Claim 1, **characterized in that** the basic weighting vectors of one set are all linearly independent.

3. The method as claimed in Claim 1 or 2, **characterized in that** at least some of the basic weighting vectors of a set are formed by establishing a first number of linearly independent basic weighting vectors and including a second number of linear combinations of the first number of basic weighting vectors in the set.

4. The method as claimed in Claim 1, 2 or 3, **characterized in that** the second set contains fewer basic weighting vectors than the first one.

5. The method as claimed in Claim 1, 2, 3 or 4, **characterized in that** the basic weighting vectors of at least one of the sets are established by the second station (MS) by means of the radio signal radiated by the first station (BS) and are transmitted to the first station (BS).

6. The method as claimed in Claim 1, 2, 3 or 4, **characterized in that** the basic weighting vectors of at least one of the sets are established by the first station by means of a radio signal sent by the second station and are transmitted to the second station.

7. The method as claimed in one of the preceding claims, **characterized in that** the first set is formed from permanently predetermined invariable basic weighting vectors.

8. The method as claimed in one of Claims 1 to 6,
   **characterized in that** the basic weighting vectors of the first and/or of the second set are obtained as eigenvectors of the covariance matrix of the transmission channel between the two stations or as linear combination of these eigenvectors.

9. The method as claimed in Claim 8, **characterized in that** the basic weighting vectors of the first set are obtained as eigenvectors ($s_1$, $s_2$, ..., $s_M$) of the covariance matrix (R) of the transmission channel between the two stations (BS, MS) and that the second set contains linear combinations of particular vectors ($s_i$, $s_j$ with i, j $\in$ {1,2,...,N}) of the first set.

10. The method as claimed in Claim 9, **characterized in that** the second set also contains the determined vectors.

11. The method as claimed in Claim 9 or 10, **characterized in that** the determined vectors are the eigenvectors of the covariance matrix which have the greatest eigenvalues.

12. The method as claimed in one of Claims 9 to 11,
    **characterized in that** the second set is used when the eigenvalues ($\lambda_1$, $\lambda_2$) of the determined vectors ($s_1$, $s_2$) exceed the eigenvalues ($\lambda_3$, $\lambda_4$) of the non-determined vectors of the first set by a given vector and/or when the eigenvalues ($\lambda_3$, $\lambda_4$) of the non-determined vectors ($s_3$, $s_4$) are below a given threshold value (No).

13. The method as claimed in Claim 5 and Claim 12,
    **characterized in that** the second set is defined at the first station (BS) by twice transmitting the basic weighting vector having the greatest eigenvalue from the second station (MS) to the first station (BS) so that the second set at the first station contains two equal basic weighting vectors in the case of faultless transmission.

14. The method as claimed in Claim 13, **characterized in that** in the case of an error in one of the transmissions of a basic weighting vector, the second station (MS) supplies to the first station (BS) the value of the feedback information which allows the best possible reception of the radio signal.

15. The method as claimed in Claim 14, **characterized in that** the second set defined at the first station (BS) contains a correctly transmitted basic weighting vector ($s_1$) and a faulty transmitted basic weighting vector ($s_{1,f}$), the second station (MS) supplies to the first station (BS) the value of the feedback information which causes it to use the correctly transmitted basic weighting vector ($s_1$) as current weighting vector.

16. The method as claimed in one of Claims 1 to 8, **characterized in that** the second set contains a single basic weighting vector.

17. The method as claimed in Claim 16, **characterized in that** the feedback information is not transmitted as long as the second set is used.

18. The method as claimed in Claim 1, **characterized in that** the first and the second number of bits are equal and the first and second code word of an element ($s_1$, $s_2$) occurring in the first and in the second set of basic weighting vectors are identical.

19. The method as claimed in Claim 1, **characterized in that** the first number of bits is n-times the second number of bits, where n is a natural number and greater than 1, and that the first code word of an element occurring in the first and in the second set of basic weighting vectors is formed by repeating a second code word n-times.

20. The method as claimed in Claim 1, **characterized in that** the first number of bits is between n-times and (n-1)-times the second number of bits, where n is a natural number and greater than 1, and that the first code word of an element occurring in the first and in the second set of basic weighting vectors is formed by repeating the second code word n-times and cutting off the result to the first number of bits.

21. The method as claimed in Claim 20, **characterized in that** the result is periodically cut off at the front and/or the rear.

22. The method as claimed in one of Claims 1 to 21, **characterized in that** for changing from using the first set of weighting vectors to the second set or conversely, the second station sends a command to the first station and the first station sends an acknowledgement to the second station when it follows the command, and the second station specifies in a time interval after the sending of the command and before the receipt of the acknowledgement in the feedback information sent to the first station, only those weighting vectors which occur both in the first and in the second set of weighting vectors.

23. The method as claimed in one of Claims 1 to 22, **characterized in that** code words of the first set which can be formed by the repeating and possibly cutting off code words of the second set are allocated to the weighting vectors used most frequently.

24. The method as claimed in one of Claims 1 to 22 and Claim 8, **characterized in that** code words of the first set which can be formed by repeating and possibly cutting off code words of the second set are allocated to the eigenvectors having the highest eigenvalue.

25. A system for carrying out the method as claimed in one of the preceding claims, **characterized by** a memory for two sets of basic weighting vectors of which the current weighting vectors consist or from which they can be generated.

26. A station (MS, BS) of the preceding system, comprising means for carrying out a method as claimed in one of the preceding method claims, which are arranged in such a manner that when the part of the method effected by the station is carried out, the entire method is mandatorily effected.

**Revendications**

1. Procédé pour commander la formation de faisceau d'un signal radio transmis par une première station (BS) équipée d'une pluralité d'antennes ($A_1$, ... $A_M$) à une seconde station (MS), dans lequel la première station (BS) choisit à l'aide d'une information de réaction fournie par la seconde station (MS) un vecteur de pondération (w) actuel à partir d'un premier ensemble de vecteurs de pondération et chaque antenne ($A_1$, ... $A_M$) est alimentée avec le signal radio envoyé, multiplié par un composant, attribué à l'antenne ($A_1$, ... $A_M$), du vecteur de pondération actuel, **caractérisé**

**en ce qu'**un second ensemble de vecteurs de pondération de base est défini, et une information concernant l'ensemble, dans lequel le vecteur de pondération actuel doit être choisi, étant transmise entre les deux stations (MS, BS), et l'information de réaction comprend une séquence de bits qui est décomposée par la première station (BS), si l'on utilise le premier ensemble de vecteurs de pondération de base, en une séquence de premiers mots de code avec un premier nombre de bits et, si l'on utilise le second ensemble de vecteurs de pondération de base, en une séquence de seconds mots de code avec un second nombre de bits, les valeurs possibles des premiers mots de code correspondant au premier ensemble de vecteurs de pondération de base et les valeurs possibles des seconds mots de code au second ensemble de vecteurs de pondération de base, et **en ce que** le second ensemble de vecteurs de pondération de base contient des éléments qui font partie également du premier ensemble et à chacun desquels est attribuée une seconde valeur de code, qui est contenue dans le premier mot de code attribué au même élément.

2. Procédé selon la revendication 1, **caractérisé en ce que** les vecteurs de pondération de base d'un ensemble sont tous indépendants linéairement.

3. Procédé selon la revendication 1 ou 2, **caractérisé en ce qu'**au moins certains des vecteurs de pondération de base de l'un des ensembles sont formés par la fixation d'un premier nombre de vecteurs de pondération de base linéairement indépendants et par l'intégration d'un second nombre de combinaisons linéaires du premier nombre de vecteurs de pondération de base dans l'ensemble.

4. Procédé selon la revendication 1, 2 ou 3, **caractérisé en ce que** le second ensemble contient moins de vecteurs de pondération que le premier.

5. Procédé selon la revendication 1, 2, 3 ou 4, **caractérisé en ce que** les vecteurs de pondération de base d'au moins l'un des ensembles sont définis par la seconde station (MS) à l'aide du signal radio envoyé par la première station (BS) et sont transmis à la première station (BS).

6. Procédé selon la revendication 1, 2, 3 ou 4, **caractérisé en ce que** les vecteurs de pondération de base d'au moins l'un des ensembles sont définis par la première station à l'aide d'un signal radio envoyé par la seconde station et sont transmis à la seconde station.

7. Procédé selon l'une quelconque des revendications précédentes, **caractérisé en ce que** le premier ensemble est formé à partir de vecteurs de pondération de base prédéfinis façon fixe et invariables.

8. Procédé selon l'une quelconque des revendications 1 à 6, **caractérisé en ce que** les vecteurs de pondération de base du premier et/ou du second ensemble sont obtenus sous forme de vecteurs propres de la matrice de covariance du canal de transmission entre les deux stations ou comme combinaisons linéaires de ces vecteurs propres.

9. Procédé selon la revendication 8, **caractérisé en ce que** les vecteurs de pondération de base du premier ensemble comme vecteurs propres ($s_1$, $s_2$, ..., $s_N$) de la matrice de covariance (R) du canal de transmission entre les deux stations (BS, MS) sont obtenus et **en ce que** le second ensemble contient des combinaisons linéaires de certains vecteurs ($s_i$, $s_j$ avec i, j ∈ {1, 2, ..., N}) du premier ensemble.

10. Procédé selon la revendication 9, **caractérisé en ce que** le second ensemble contient également les vecteurs définis.

11. Procédé selon la revendication 9 ou 10, **caractérisé en ce que** les vecteurs définis présentent les vecteurs propres de la matrice de covariance qui présentent les plus grandes valeurs propres.

12. Procédé selon l'une quelconque des revendications 9 à 11, **caractérisé en ce que** le second ensemble est utilisé lorsque les valeurs propres ($\lambda_1$, $\lambda_2$) des vecteurs ($s_1$, $s_2$) définis dépassent d'un facteur donné les valeurs propres ($\lambda_3$, $\lambda_4$) des vecteurs non définis du premier ensemble et/ou et lorsque les valeurs propres ($\lambda_3$, $\lambda_4$) des vecteurs ($s_3$, $s_4$) non définis sont inférieures à une valeur seuil (No) donnée.

13. Procédé selon la revendication 5 et la revendication 12, **caractérisé en ce que** le second ensemble est défini sur la première station (BS) par une double transmission du vecteur de pondération de base avec la valeur propre la plus grande de la seconde station (MS) à la première station (BS), de sorte que le second ensemble sur la première station contient deux vecteurs de pondération de base identiques dans le cas d'une transmission sans erreur.

**14.** Procédé selon la revendication 13, **caractérisé en ce que**, dans le cas d'une erreur lors de l'une des transmissions de l'un des vecteurs de pondération de base, la seconde station fournit la valeur de l'information de réaction à la première station (BS) qui permet la meilleure réception possible du signal radio.

**15.** Procédé selon la revendication 14, **caractérisé en ce que** le second ensemble défini sur la première station (BS) contient un vecteur de pondération de base ($s_1$) transmis correctement et un vecteur de pondération de base ($s_{1,f}$) transmis de façon défectueuse, la seconde station (MS) fournit la valeur de l'injection de l'information de réaction à la première station (BS), qui ordonne à cette station d'utiliser le vecteur de pondération de base ($s_1$) transmis correctement comme vecteur de pondération actuel.

**16.** Procédé selon l'une quelconque des revendications 1 à 8, **caractérisé en ce que** le second ensemble contient un unique vecteur de pondération de base.

**17.** Procédé selon la revendication 16, **caractérisé en ce que** la transmission de l'information de réaction est supprimée aussi longtemps que le second ensemble est utilisé.

**18.** Procédé selon la revendication 1, **caractérisé en ce que** le premier et le second nombre de bits sont identiques et le premier et le second mot de code d'un élément ($s_1$, $s_2$) apparaissant dans le premier et le second ensemble de vecteurs de pondération de base sont identiques.

**19.** Procédé selon la revendication 1, **caractérisé en ce que** le premier nombre de bits est égal à n fois le second nombre de bits, n étant un nombre naturel et supérieur à 1, et **en ce que** le premier mot de code d'un élément apparaissant dans le premier et dans le second ensemble de vecteurs de pondération de base est formé par n fois la répétition du second mot de code.

**20.** Procédé selon la revendication 1, **caractérisé en ce que** le premier nombre de bits est compris entre n fois et (n-1) fois le second nombre de bits, n étant un nombre naturel et supérieur à 1, et **en ce que** le second mot de code d'un élément apparaissant dans le premier et le second ensemble de vecteurs de pondération de base est formé par n fois la répétition du second mot de code et la réduction du résultat au premier nombre de bits.

**21.** Procédé selon la revendication 20, **caractérisé en ce que** le résultat est coupé de façon périodique devant et/ou derrière.

**22.** Procédé selon l'une quelconque des revendications 1 à 21, **caractérisé en ce que**, pour passer de l'utilisation du premier ensemble de vecteurs de pondération au second ensemble ou inversement, la seconde station envoie un ordre à la première station et la première station envoie une confirmation à la seconde station lorsqu'elle suit l'ordre, et la seconde station spécifie, dans un intervalle de temps faisant suite à l'envoi de l'ordre et avant la réception de la confirmation dans l'information de réaction envoyée à la première station, uniquement les vecteurs de pondération qui surviennent aussi bien dans le premier que dans le second ensemble de vecteurs de pondération.

**23.** Procédé selon l'une quelconque des revendications 1 à 22, **caractérisé en ce que** des mots de code du premier ensemble, qui peuvent être formés par répétition et le cas échéant réduction de mots de code du second ensemble, sont attribués aux vecteurs de pondération les plus souvent utilisés.

**24.** Procédé selon l'une quelconque des revendications 1 à 22 et la revendication 8, **caractérisé en ce que** des mots de code du premier ensemble, qui peuvent être formés par répétition et le cas échéant réduction de mots de code du second ensemble, sont attribués aux vecteurs propres avec la valeur propre maximale.

**25.** Système pour la mise en oeuvre du procédé selon l'une quelconque des revendications précédentes, **caractérisé par** une mémoire pour deux ensembles de vecteurs de pondération de base, desquels les vecteurs de pondération actuels se composent ou à partir desquels ils peuvent être générés.

**26.** Station (MS, BS) du système précédent, comprenant des moyens pour la mise en oeuvre d'un procédé selon l'une quelconque des revendications de procédé précédentes, qui sont donc mises en oeuvre de telle sorte que, pour la mise en oeuvre de la partie du procédé réalisée par la station, l'ensemble du procédé est forcément réalisé.

# Fig. 1

A₁, A₂,...

MS

V1

V2

MS

MS

Vk

MS

BS

BS

BSC

MSC

PSTN

# Fig. 2A

# Fig. 2B

# Fig. 2C

λ

λ₁ λ₂ λ₃ λ₄

λ

λ₁ λ₂ λ₃ λ₄

λ

λ₁ λ₂ λ₃ λ₄

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Preliminary Version of Algorithm and Simulation Results for Tx Diversity with more than 2 Tx Antennas. *TSG-RAN WORKING GROUP 1 MEETING #14,* 04. Juli 2000, 1-4